(19) **Europäisches Patentamt / European Patent Office / Office européen des brevets**

(11) **EP 4 693 213 A1**

(12) **EUROPEAN PATENT APPLICATION**
published in accordance with Art. 153(4) EPC

(43) Date of publication:
**11.02.2026 Bulletin 2026/07**

(21) Application number: **24870693.9**

(22) Date of filing: **24.09.2024**

(51) International Patent Classification (IPC):
***G06V 10/22*** (2022.01)

(52) Cooperative Patent Classification (CPC):
**G06V 10/22; G06V 10/74**

(86) International application number:
**PCT/CN2024/120642**

(87) International publication number:
**WO 2025/067149 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.09.2023 CN 202311282716**

(71) Applicant: **ZTE Corporation**
**Shenzhen, Guangdong Province 518057 (CN)**

(72) Inventor: **ZHANG, Diankai**
**Shenzhen, Guangdong 518057 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **BOUNDING BOX ADJUSTMENT METHOD FOR OBJECT DETECTION ALGORITHM, DEVICE, AND STORAGE MEDIUM**

(57) The present application provides a bounding box adjustment method for an object detection algorithm, a device, and a storage medium. The method comprises: when object detection is performed on the basis of an object detection algorithm, acquiring a first image feature corresponding to a bounding box of the object detection algorithm in a historical frame and a second image feature corresponding to the bounding box of the object detection algorithm in a current frame, the number of frames by which the historical frame and the current frame are spaced apart being not greater than a preset frame value (S102); determining a comparison result between the first image feature and the second image feature (S104); and, using a first box selection area corresponding to the historical frame as a reference and on the basis of a degree of adjustment that is adapted to the comparison result, adjusting a second box selection area corresponding to the bounding box in the current frame (S106). According to the method, the stability of the bounding box during object detection can be improved, thereby mitigating the influence of disordered jumping of the bounding box on subsequent computer vision applications.

Acquire a first image feature corresponding to a bounding box of the object detection algorithm in a historical frame and a second image feature corresponding to a bounding box of the object detection algorithm in a current frame when object detection is performed on the basis of an object detection algorithm, where the number of frames by which the historical frame and the current frame are spaced apart is not greater than a preset frame value — S102

Determine a comparison result between the first image feature and the second image feature — S104

Adjust a second box selection area corresponding to the bounding box in the current frame by using a first box selection area corresponding to the historical frame as a reference and on the basis of a degree of adjustment that is adapted to the comparison result — S106

FIG. 1

Processed by Luminess, 75001 PARIS (FR)

**Description**

**CROSS REFERENCE TO RELATED APPLICATIONS**

The present application is based upon and claims priority to Chinese Patent Application No. 202311282716.0, filed on September 28, 2023, entitled "BOUNDING BOX ADJUSTMENT METHOD FOR OBJECT DETECTION ALGORITHM, DEVICE, AND STORAGE MEDIUM", the entire contents of which are incorporated herein by reference.

**TECHNICAL FIELD**

The present application relates to a bounding box adjustment method for an object detection algorithm, a device, and a storage medium.

**BACKGROUND**

An object detection algorithm is used to find an object in an image, and is the core technology for computer vision applications such as face recognition and vehicle recognition.

According to the object detection algorithm, a bounding box is used to select an area of an object in an image by means of a box, so as to facilitate extraction of image features in subsequent computer vision applications. Currently, mainstream object detection algorithms have the capability of locking an object, that is, the bounding box follows the position of the object. However, when object detection is performed in a non-stationary image (such as a video), the position of an object in the image can hardly remain unchanged, which will cause the bounding box to jitter. Once the bounding box becomes unstable, great difference between image features extracted from previous and subsequent frames may become great difference for subsequent computer vision applications, which not only causes a large amount of computing overhead but also affect the final effect of computer vision applications.

Therefore, how to improve the stability of a bounding box of an object detection algorithm and thus reduce the negative impact on subsequent computer vision applications is a technical problem that needs to be addressed.

**SUMMARY**

An object of the present application is to provide a bounding box adjustment method for an object detection algorithm, a device, and a storage medium.

In a first aspect, there is provided a bounding box adjustment method for an object detection algorithm, including: acquiring a first image feature corresponding to a bounding box of the object detection algorithm in a historical frame and a second image feature corresponding to a bounding box of the object detection algorithm in a current frame when object detection is performed on the basis of the object detection algorithm, wherein the number of frames by which the historical frame and the current frame are spaced apart is not greater than a preset frame value; determining a comparison result between the first image feature and the second image feature; and adjusting a second box selection area corresponding to the bounding box in the current frame by using a first box selection area corresponding to the historical frame as a reference and on the basis of a degree of adjustment that is adapted to the comparison result.

In a second aspect, an embodiment of the present application provides an electronic device, comprising: a processor, and a memory configured to store computer-executable instructions, wherein the computer-executable instructions, when executed, enable the processor to execute the method of the first aspect.

In a third aspect, there is provided a computer-readable storage medium configured to store computer-executable instructions, wherein the computer-executable instructions, when executed by a processor, implement the method of the first aspect.

**BRIEF DESCRIPTION OF THE DRAWINGS**

In order to more clearly illustrate the technical solutions in the embodiments of the present application or in the prior art, the drawings required for use in description of the embodiments or the prior art will be briefly introduced therebelow. Apparently, the drawings described below are only some embodiments described in the present application, and other drawings can be obtained by those skilled in the art based on these drawings without involving creative work.

FIG. 1 is a schematic flow chart of a bounding box adjustment method for an object detection algorithm according to embodiments of the present application.
FIG. 2 is a schematic diagram showing changes of a bounding box from a historical frame to a current frame.
FIG. 3 is a flow chart of a bounding box adjustment method according to embodiments of the present application in application.

FIG. 4 is a schematic structural diagram of a bounding box adjustment device for an object detection algorithm according to an embodiment of the present application.

FIG. 5 is a schematic structural diagram of an electronic device according to an embodiment of the present application.

**DETAILED DESCRIPTION**

As described above, according to an object detection algorithm, a bounding box is used to select an area of an object in an image by means of a box, so as to facilitate extraction of image features in subsequent computer vision applications. Currently, mainstream object detection algorithms have the capability of locking an object, that is, the bounding box follows the position of the object. However, when object detection is performed in a non-stationary image (such as a video), the position of an object in the image can hardly remain unchanged, which will cause the bounding box to jitter.

A computer vision application involving face recognition is taken as an example. When a user initiates image acquisition by using his/her own terminal device, an object detection algorithm locates a face area of the user from multiple frames of acquired images. During the normal acquisition process, the user's body shakes more or less, which causes change of the face area in an acquisition interface, and in turn causes the bounding box to jitter. Further some image features (such as texture and grayscale) selected finally have great difference, which impacts the computer vision applications (such as facial retouching and face replacement).

Therefore, the present application is intended to provide a bounding box adjustment method for an object detection algorithm, such that the stability of the bounding box during object detection can be improved, thereby mitigating the influence of disordered jittering of the bounding box on subsequent computer vision applications.

In order to enable those skilled in the art to better understand the technical solutions in the specification, technical solutions in embodiments of the application will be described clearly and thoroughly below with reference to the accompanying drawings in embodiments of the application. Apparently, the embodiments described are part of the embodiments of the specification rather than all of the embodiments. All other embodiments obtained by those skilled in the art without creative work based on embodiments in the present specification should fall within the scope of the present specification.

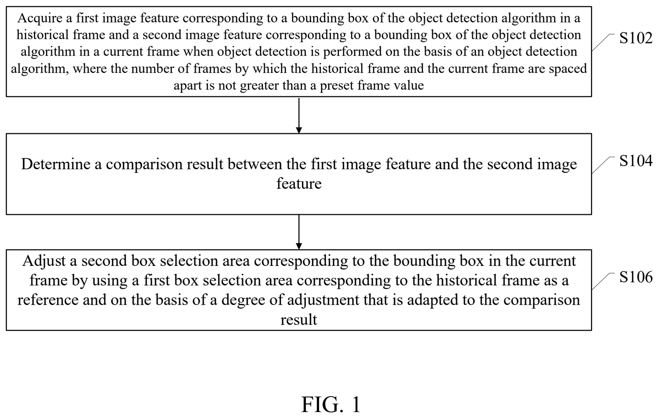

In one aspect, an embodiment of the present application provides a bounding box adjustment method for an object detection algorithm. FIG. 1 is a schematic flow chart of the bounding box adjustment method, which includes the following steps.

At step S102, when object detection is performed on the basis of the object detection algorithm, a first image feature corresponding to a bounding box of the object detection algorithm in a historical frame and a second image feature corresponding to a bounding box of the object detection algorithm in a current frame are acquired, wherein the number of frames by which the historical frame and the current frame are spaced apart is not greater than a preset frame value.

In this embodiment, the bounding box in the historical frame is used as a reference, so as to adjust the bounding box in the current frame. Therefore, the number of frames between the historical frame and the current frame should not be too large, preferably less than or equal to a preset frame value (e.g., 3 frames). In some cases, the historical frame and the current frame may be two consecutive frames.

The image feature (the first image feature and second image feature) selected by the bounding box may be, but is not limited to, a texture feature, a color feature, a deep-learning feature, or a grayscale feature related to the images, which are all input parameters commonly used in computer vision applications and are not specifically limited herein.

At step S104, a comparison result between the first image feature and the second image feature is determined.

In this embodiment, the first image feature and the second image feature may be vectorized to obtain a first feature vector corresponding to the first image feature and a second feature vector corresponding to the second image feature; afterwards, the similarity between the first feature vector and the second feature vector is calculated to obtain the comparison result between the first image feature and the second image feature.

In some cases, the similarity may be calculated by a cosine similarity algorithm, a variance similarity algorithm, etc., which is not specifically limited herein.

At step S106, a second box selection area corresponding to the bounding box in the current frame is adjusted by using a first box selection area corresponding to the historical frame as a reference and on the basis of the degree of adjustment that is adapted to the comparison result.

It should be understood that the similarity between the first image feature and the second image feature may indicate change of the bounding box extracted from the historical frame and the current frame.

If such change is minor, that is, the comparison result indicates that the similarity between the first image feature and the second image feature reaches a first threshold, it means that the main part, which presents the image feature, of the object is still within the first box selection area. In this case, it is inappropriate to change the bounding box, and thus the area parameter corresponding to the second box selection area is directly adjusted to the area parameter corresponding to the first box selection area. That is, after transition of the bounding box from the history frame to the current frame, the first box selection area remains unchanged.

If the change is too big, that is, the comparison result indicates that a similarity between the first image feature and the second image feature does not reach a second threshold (the second threshold is less than or equal to the first threshold), it means that the main part, which presents the image feature, of the object is beyond the first box selection area. In this case, the first box selection area is no longer applicable to the bounding box, and in order to avoid the bounding box from jumping from the first box selection area to the second box selection area abruptly, it is necessary to adjust the area parameter corresponding to the second box selection area to a value approximate to the area parameter of the first box selection area, so as to realize smooth transition.

Exemplarily, in this embodiment, weighted-averaging may be performed on the area parameters (such as center coordinates, widths, and heights) corresponding to the first box selection area and the second box selection area, and the area parameter corresponding to the second box selection area is adjusted to a weighted-averaged area parameter, so as to realize smooth transition.

The similarity between the first image feature and the second image feature is negatively correlated with a weight of the area parameter corresponding to the second box selection area when weighted-averaging is performed. That is, a high similarity indicates that jittering of the bounding box from the historical frame to the current frame is relatively low. In this case, in order to reduce the computing overhead for change in the bounding box in subsequent computer vision applications, it is inappropriate to change a box selection area of the bounding box too much, therefore, the weight of the area parameter corresponding to the second box selection area in weighted-averaging is appropriately reduced. In contrast, a low similarity indicates that the jittering of the bounding box from the historical frame to the current frame is relatively high, and the object in the image is far away from the first box selection area. In this case, it is inappropriate to adjust the second box selection area by using the first box selection area as a reference, therefore, the weight of the area parameter corresponding to the second box selection area during weighted averaging is increased, so as to ensure that the adjusted second box selection area can cover the main part which presents the image feature of the object.

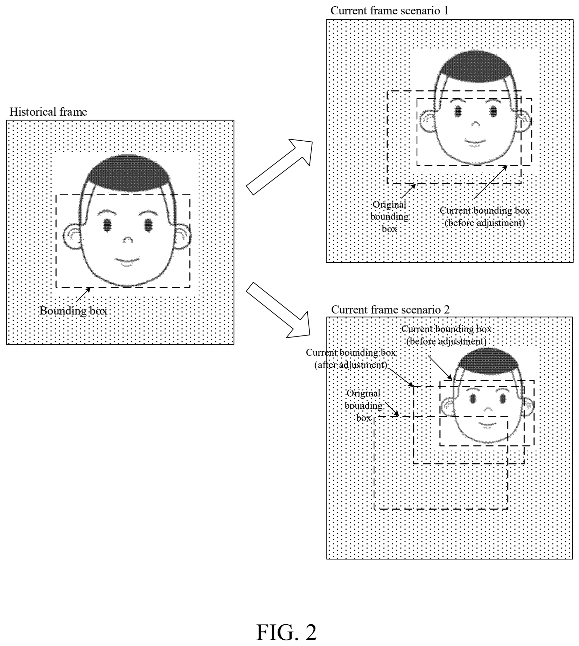

For ease of understanding, please refer to the application scenario based on face recognition shown in FIG. 2. Herein, transition of the bounding box from the historical frame to the current frame is divided into the following two scenarios.

In scenario 1, the difference between image features selected by an original bounding box (historical frame) and a current bounding box (current frame) is relatively small, that is, after the position of the face is changed, the original bounding box can be still used select the face feature of the user in the current frame. In this case, an area parameter of the current bounding box may be adjusted to an area parameter of the original bounding box, so that the current frame still uses the original bounding box.

In scenario 2, the difference between image features selected by an original bounding box and a current bounding box is too large, that is, after the position of face is changed, the original bounding box cannot be used to select the face feature of the user in the current frame any longer. In this case, an area parameter of the current bounding box may be adjusted to a value approximate to an area parameter of the original bounding box, so that compared to a current bounding box before adjustment, the current bounding box after adjustment approaches the original bounding box more, so as to avoid abrupt change.

In summary, when the method of this embodiment is used to perform object detection based on the object detection algorithm, the image feature selected by the bounding box in the historical frame is compared with the image feature selected by the bounding box in the current frame, so as to evaluate change of the bounding box from the historical frame to the current frame. Afterwards, by using the first box selection area corresponding to the historical frame as a reference and on the basis of the degree of adjustment that is adapted to the comparison result, the second box selection area corresponding to the bounding box in the current frame is adjusted, so that transition of the second box selection area in the current frame from the first box selection area of the historical frame is smoother, which can avoid excessive change of the selected image features from influencing a subsequent computer vision application. Based on the method of this embodiment, when object detection is performed on multi-frame images, the stability and continuity of the bounding box between frames can be improved, and better support can be provided for subsequent computer vision applications.

Implementations of the method of the embodiments are introduced therebelow.

In the method of this embodiment, a box selection area of the bounding box corresponding to the current frame is adjusted by taking a box selection area of the bounding box corresponding to a previous frame a reference. The corresponding process includes the following.

At step S1, initial parameters of an object detection algorithm are set, where initial parameters include area parameters (center coordinates, width and height) of the bounding box in a previous frame, the address of image data of the previous frame, the flag of the first frame, the feature matching threshold and the weighting coefficient alpha, etc.

The feature matching threshold and weighting coefficient alpha may be flexibly set according to actual conditions, and the value range of alpha is [0,1].

At step S2, the object detection algorithm is used to try to perform object detection on an input frame image; if the number of detected objects is 0, step S2 is re-executed; and if the number of objects is greater than 0, initial area parameters of the bounding box, including the center coordinates, width and height, are output.

At step S3, the flag of the first frame among the initial area parameters of the bounding box is determined; if the flag of the first frame is 0 (not marked), it means that the area parameter corresponding to the bounding box in the previous frame is unavailable at this time, and the initial area parameter of the bounding box is used as the area parameter corresponding to the current frame, then step S4 is turned to; and if the flag of the first frame is 1 (marked), the next frame is entered and step S5 is turned to.

A result bounding box refers to the bounding box whose box selection area is no longer adjusted. After entering the next frame, the next frame becomes a new current frame.

At step S4, an area parameter of the result bounding box is updated to the area parameter of the bounding box in the previous frame; and then, the next frame is entered to execute step S5.

At step S5, image features of the current frame and the previous frame are extracted on the basis of the area parameter of the bounding box corresponding to the current frame and the the area parameter of the bounding box corresponding to previous frame.

At step S6, the similarity between the image features of the current frame and the previous frame is calculated to determine a comparison result; and if the similarity sim indicated by the comparison result reaches the feature matching threshold, step S7 is turned to, otherwise step S8 is turned to.

If there are a plurality of types of image features, such as texture feature, color feature, deep-learning feature and grayscale feature, etc., the similarity may be calculated individually for each type of image feature, and the calculation results may be finally weighted to determine the overall similarity.

At step S7: the bounding box in the previous frame is used as the result bounding box in the current frame; and then step S4 is turned to.

At step S8: weighted-averaging is performed on the initial area parameters of the bounding box in the previous frame and the bounding box in the current frame, so as to obtain the result bounding box in the current frame; and then step S4 is turned to.

The calculation formula of weighted-averaging is as follows:

area information of the result bounding box in the current frame = alpha × area information of the bounding box in the previous frame + (1-alpha) × initial area information of the bounding box in the current frame.

In addition, on such basis, if a negative correlation between similarity and (1-alpha) is introduced, the calculation formula for weighted-averaging may be as follows:

area information of the result bounding box in the current frame = alpha × area information of the bounding box in the previous frame + (1-alpha) × beta × initial area information of the bounding box in the current frame.

Where, beta is used to correct (1-alpha), beta = a-b/similarity; a and b are customized coefficients.

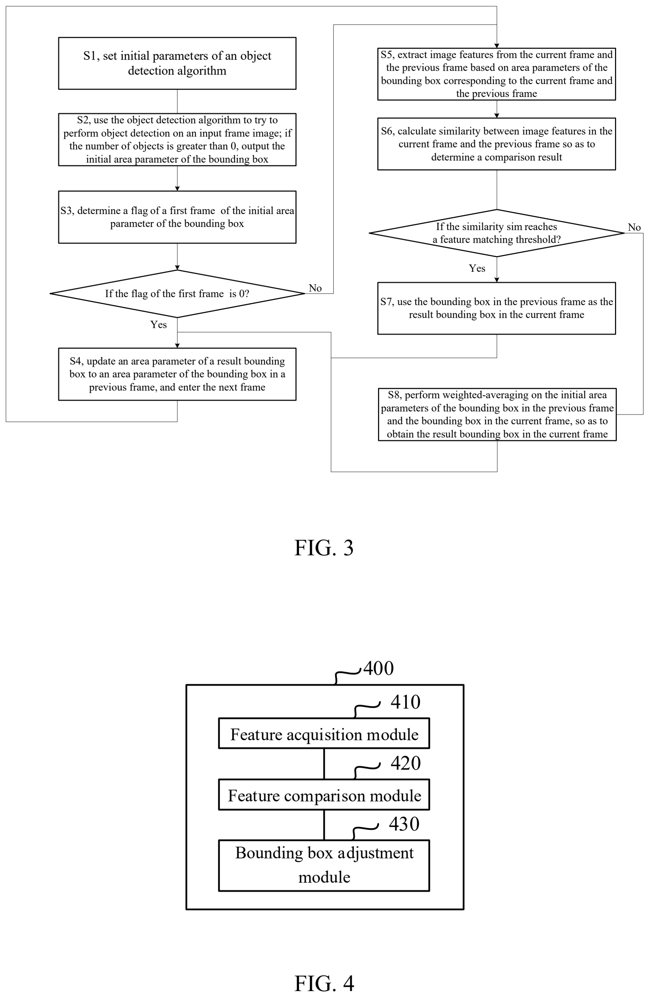

The process shown in FIG. 3 is introduced exemplarily in different service scenarios.

Service scenario 1

This service scenario is a computer vision application based on face detection. The corresponding process includes the following.

At step S1, initial system parameters, which includes area information preRect of a face bounding box in the previous frame, image data preData in the previous frame, and a flag isNotFirstFrame of the first frame, are set to be 0, , the feature matching threshold is 4.0, and the weighting coefficient alpha is 0.5.

At step S2, based on an object detection algorithm of a single shot multibox detector (SSD), face detection is performed on an input frame image; if it is detected that the number of objects is 0, step S2 is re-executed; or if it is detected that the number of objects is greater than 0, initial area information curRect of the face bounding box, which includes the center coordinate, width and height (in the unit of the pixel number) of the face bounding box, is acquired.

At step S3, isNotFirstFrame of curRect is determined; if isNotFirstFrame is 0, then curRect is used as area information resultRect of the face bounding box in the current frame, and then step S4 is turned to; or if isNotFirstFrame is 1, the next frame is entered and step S5 is turned to.

At step S4, the area parameter information curRec of a result bounding box is updated to the area parameter preRect of the bounding box in the previous frame, that is, isNotFirstFrame is 1, and image data preData in the current frame is saved; afterwards, the next frame is entered so as to execute step S5.

At step S5, area information preRect of the face bounding box in the previous frame is read, the position of the same face bounding box is cut from image data curData in the current frame and image data preData in the previous frame respectively, and image grayscale feature vectors curFea and preFea are extracted.

At step S6, a mean square error similarity (mse) between image feature vectors curFea and preFea is calculated, if mse < thresh, step S7 is turned, otherwise step S8 is turned to.

$$mse = \frac{\sum_i (\mathrm{curFea}[i] - preFea[i])^2}{\mathrm{N}},$$

N is the length of the feature vector.

At step S7: preRect of the face bounding box in the previous frame is used as resultRect of a face bounding box result in the current frame, and step S4 is turned to.

At step S8: weighted-averaging is performed on the center, width and height parameters of both preRect of the face bounding box in the previous frame and curRect of the initial face bounding box in the current frame, so as to obtain the face bounding box result resultRect in the current frame, and step S4 is turned to.

The calculation formula for weighted-averaging is as follows:

$$\mathrm{resultRect.center} = \mathrm{alpha} \times \mathrm{preRect.center} + (1\text{-}\mathrm{alpha}) \times \mathrm{curRect.center};$$

$$\mathrm{resultRect.height} = \mathrm{alpha} \times \mathrm{preRect.height} + (1\text{-}\mathrm{alpha}) \times \mathrm{curRect.height};$$

$$\mathrm{resultRect.width} = \mathrm{alpha} \times \mathrm{preRect.width} + (1\text{-}\mathrm{alpha}) \times \mathrm{curRect.width}.$$

On the basis of the above, if a negative correlation between mse and (1-alpha) is introduced, the calculation formula for weighted-averaging may be as follows:

$$\mathrm{resultRect.center} = \mathrm{alpha} \times \mathrm{preRect.center} + (1\text{-}\mathrm{alpha}) \times \mathrm{beta} \times \mathrm{curRect.center};$$

$$\mathrm{resultRect.height} = \mathrm{alpha} \times \mathrm{preRect.height} + (1\text{-}\mathrm{alpha}) \times \mathrm{beta} \times \mathrm{curRect.height};$$

$$\mathrm{resultRect.width} = \mathrm{alpha} \times \mathrm{preRect.width} + (1\text{-}\mathrm{alpha}) \times \mathrm{beta} \times \mathrm{curRect.width}.$$

Where, beta = a - b / mse; a and b are customized coefficients.

Service scenario 2

This service scenario is a computer vision application related to vehicle detection. The process includes the following.

At step S1, initial system parameter, which include area information preRect of a vehicle bounding box in the previous frame, image data preData in the previous frame, and a flag isNotFirstFrame of the first frame, are set to be 0, the feature matching threshold is 0.95, and the weighting coefficient alpha is 0.5.

At step S2, based on an object detection algorithm of Yolov7, vehicle detection is performed on an input frame image; if it is detected that the number of vehicles is 0, step S2 is re-executed; or if it is detected that the number of objects is greater than 0, initial area information curRect of the vehicle bounding box,, which includes the center coordinate, width and height (in the unit of the pixel number) of the vehicle bounding box, is acquired.

At step S3, isNotFirstFrame of curRect is determined; if isNotFirstFrame is 0, then curRect is used as area information of a result vehicle bounding box in the current frame resultRect, then step S4 is turned to; or if isNotFirstFrame is 1, the next frame is entered and step S5 is turned to.

At step S4, the area parameter curRec of the result bounding box is updated to the area parameter preRect of the bounding box in the previous frame, that is, isNotFirstFrame is 1, and image data preData in the current frame is saved; afterwards, the next frame is entered so as to execute step S5.

At step S5, area information preRect of the vehicle bounding box in the previous frame is read, the position of the same vehicle bounding box is cut from image data curData in the current frame and image data preData in the previous frame respectively, and the RGB normalized histogram feature vectors curFea and preFea are extracted as follows.

Assuming that the width and height of the input image are W and H respectively, and the value range of RGB pixel is [0-GrayLevel], the image is traversed and the R, G, and B component histograms are counted as histR, histG, and histB respectively, and the length of each histogram is GrayLevel+1.

Then, normalized histograms are calculated by histR = histR / (W*H), histG = histG / (W*H), histB = histB / (W*H).

Then, the normalized histograms are concatenated into a histogram (hist) with the length of hist being 3* (GrayLevel+1), which is used as the feature of the cut image.

At step S6, a cosine similarity (cos) between two image feature vectors curFea and preFea is calculated, if cos > thresh, step S7 is turned to, otherwise step S8 is turned to.

The calculation formula for cosine similarity cos is as follows:

$$\cos(x, y) = x \cdot y = \sum_{i-0}^{N} x_i y_i;$$

x and y represent curFea and preFea respectively, $N = 3 \times (GrayLevel + 1) - 1$.

At step S7: preRect of the vehicle bounding box in the previous frame is used as resultRect of the vehicle bounding box result in the current frame, and S4 is turned to.

At step S8: weighted processing is performed on the center, width and height parameters of both preRect of the vehicle bounding box in the previous frame and curRect of the initial vehicle bounding box in the current frame, so as to obtain the vehicle bounding box result resultRect in the current frame, and step S4 is turned to.

The calculation formula for weighted-averaging is as follows:

$$resultRect.center = alpha \times preRect.center + (1-alpha) \times curRect.center;$$

$$resultRect.height = alpha \times preRect.height + (1-alpha) \times curRect.height;$$

$$resultRect.width = alpha \times preRect.width + (1-alpha) \times curRect.width.$$

In another aspect, an embodiment of the present application provides a bounding box adjustment device for an object detection algorithm. FIG. 4 is a schematic structural diagram of a bounding box adjustment device, including: a feature acquisition module 410, which is configured to acquire a first image feature corresponding to a bounding box of the object detection algorithm in a historical frame and a second image feature corresponding to a bounding box of the object detection algorithm in a current frame when object detection is performed on the basis of the object detection algorithm,, where the number of frames by which the historical frame and the current frame are spaced apart is not greater than a preset frame value; a feature comparison module 420, which is configured to determine a comparison result between the first image feature and the second image feature; and a bounding box adjustment module 430, which is configured to adjust a second box selection area corresponding to the bounding box in the current frame by using a first box selection area corresponding to the historical frame as a reference and on the basis of the degree of adjustment that is adapted to the comparison result.

When the device of this embodiment performs object detection based on the object detection algorithm, the image feature selected by the bounding box in the historical frame is compared with the image feature selected by the bounding box in the current frame, so as to evaluate change of the bounding box from the historical frame to the current frame. Afterwards, by using the first box selection area corresponding to the historical frame as a reference and on the basis of the degree of adjustment that is adapted to the comparison result, the second box selection area corresponding to the bounding box in the current frame is adjusted, so that transition of the second box selection area in the current frame from the first box selection area of the historical frame is smoother, which can avoid excessive change of the selected image features from influencing a subsequent computer vision application. Based on the device of this embodiment, when object detection is performed on multi-frame images, the stability and continuity of the bounding box between frames can be improved, and better support can be provided for subsequent computer vision applications.

In one embodiment, that the bounding box adjustment module 430 adjusts the second box selection area corresponding to the bounding box in the current frame by using the first box selection area corresponding to the historical frame as a reference and on the basis of the degree of adjustment that is adapted to the comparison result includes: upon the condition that the comparison result indicates that the similarity between the first image feature and the second image feature reaches a first threshold, an area parameter corresponding to the second box selection area is adjusted to an area parameter corresponding to the first box selection area.

In one embodiment, that the bounding box adjustment module 430 adjusts the second box selection area corresponding to the bounding box in the current frame by using the first box selection area corresponding to the historical frame as a reference and on the basis of the degree of adjustment that is adapted to the comparison result includes: upon the condition that the comparison result indicates that the similarity between the first image feature and the second image feature does not reach a second threshold, an area parameter corresponding to the second box selection area is adjusted to a value approximate to an area parameter corresponding to the first box selection area.

In one embodiment, that the bounding box adjustment module 430 adjusts the area parameter corresponding to the second box selection area to the value approximate to the area parameter corresponding to the first box selection area includes: weighted-averaging is performed on area parameters corresponding to the first box selection area and the second box selection area so as to obtain a weighted-averaged area parameter; and the area parameter corresponding to the second box selection area is adjusted to be the weighted-averaged area parameter.

In one embodiment, the similarity between the first image feature and the second image feature is negatively correlated with a weight of the area parameter corresponding to the second box selection area when weighted-averaging is performed.

In one embodiment, that the comparison result between the first image feature and the second image feature is determined includes: the first image feature and the second image feature are vectorized so as to obtain a first feature vector corresponding to the first image feature and a second feature vector corresponding to the second image feature; and on the similarity between the first feature vector and the second feature vector is calculated to obtain the comparison result between the first image feature and the second image feature.

In one embodiment, the area parameter includes a center coordinate of the bounding box in the bounding picture, a width of the bounding box, and a height.

In one embodiment, the image feature includes at least one of a texture feature, a color feature, a deep-learning feature or a grayscale feature.

It should be understood that the bounding box adjustment device shown in FIG. 4 may be used as an execution subject of the method shown in FIG. 1, so the bounding box adjustment device can implement the steps of the method shown in FIG. 1 and achieve corresponding functions. Since the principles are the same, it will not be repeated in detail herein.

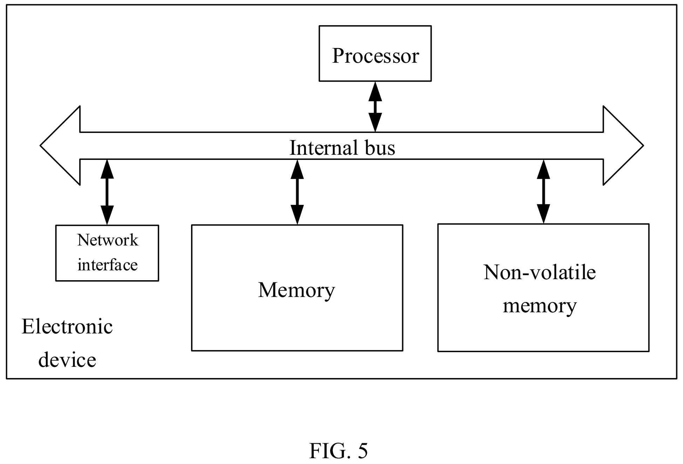

FIG. 5 is a schematic structural diagram of an electronic device according to an embodiment of the present application. Referring to FIG. 5, at the hardware level, the electronic device includes a processor, and in an embodiment, further includes an internal bus, a network interface, and a memory. The memory may include an internal memory, for example a high-speed random access memory (RAM), and may also include a non-volatile memory (non-volatile memory), such as at least one disk storage, etc. Of course, the electronic device may also include hardware required for other services.

The processor, network interface and memory may be interconnected by an internal bus, which may be an Industry Standard Architecture (ISA) bus, a Peripheral Component Interconnect (PCI) bus or an Extended Industry Standard Architecture (EISA) bus, etc. The bus may be divided into an address bus, a data bus, a control bus, etc. For ease of representation, only one bidirectional arrow is used in FIG. 5, but it does not mean that there is only one bus or one type of bus.

The memory is used to store the program. In some cases, the program may include program codes, and the program codes include computer operation instructions. The memory may include an internal memory and a non-volatile memory, and provides instructions and data to the processor.

In one embodiment, the processor reads the corresponding computer program from the non-volatile memory into the memory and then runs the corresponding computer program, forming the bounding box adjustment device shown in FIG. 4. Correspondingly, the processor executes the program stored in the memory and is specifically used to execute the following operations: when object detection is performed on the basis of an object detection algorithm, acquiring a first image feature corresponding to a bounding box of the object detection algorithm in a historical frame and a second image feature corresponding to the bounding box of the object detection algorithm in a current frame, where the number of frames by which the historical frame and the current frame are spaced apart is greater than a preset frame value; determining a comparison result between the first image feature and the second image feature; and adjusting a second box selection area corresponding to the bounding box in the current frame by using a first box selection area corresponding to the historical frame as a reference and on the basis of the degree of adjustment that is adapted to the comparison result.

When the electronic device of this embodiment performs object detection based on the object detection algorithm, the image feature selected by the bounding box in the historical frame is compared with the image feature selected by the bounding box in the current frame, so as to evaluate change of the bounding box from the historical frame to the current frame. Afterwards, by using the first box selection area corresponding to the historical frame as a reference and on the basis of the degree of adjustment that is adapted to the comparison result, the second box selection area corresponding to the bounding box in the current frame is adjusted, so that transition of the second box selection area in the current frame from the first box selection area of the historical frame is smoother, which can avoid excessive change of the selected image features from influencing a subsequent computer vision application. Based on the electronic device of this embodiment, when object detection is performed on multi-frame images, the stability and continuity of the bounding box between frames can be improved, and better support can be provided for subsequent computer vision applications.

The bounding box adjustment method disclosed in embodiments of the present application may be applied to a processor and implemented by a processor. The processor may be an integrated circuit chip with signal processing capabilities. In the implementation process, each step of the above method may be completed by an integrated logic circuit in the form of hardware in the processor or an instruction in the form of software. The above processor may be a general-purpose processor, including a central processing unit (CPU), a network processor (NP), etc.; it may also be a digital signal processor (DSP), an application-specific integrated circuit (ASIC), a field-programmable gate array (FPGA) or other programmable logic devices, discrete gates or transistor logic devices, discrete hardware components. The methods, steps and logic block diagrams disclosed in the embodiments of the present application may be implemented or executed. A general-purpose processor may be a microprocessor or the processor may also be any conventional processor, etc. The steps of the method disclosed in the embodiments of the present application may be directly embodied as a hardware decoding processor for execution, or may be implemented by a combination of hardware and software modules in the decoding processor. The software module may be located in a storage medium well-known in the art, such as a random access memory, a flash memory, a read-only memory, a programmable read-only memory, or an electrically erasable programmable memory, a register, etc. The storage medium is located in the memory, and the processor reads information in the memory and completes the steps of the above method in combination with its hardware.

In addition to software implementation methods, the electronic device of the present application does not exclude other implementation methods, such as logic devices or a combination of software and hardware, etc., that is, the execution subject of the following processing flow is not limited to each logic unit, but may also be hardware or logic devices.

In addition, an embodiment of the present application further proposes a computer-readable storage medium, the computer-readable storage medium stores one or more programs, and the one or more programs store instructions.

When the above-mentioned instructions are executed by a portable electronic device including a plurality of applications, the portable electronic device can execute the steps of the method shown in FIG. 1, including: when object detection is performed on the basis of an object detection algorithm, acquiring a first image feature corresponding to a bounding box of the object detection algorithm in a historical frame and a second image feature corresponding to the bounding box of the object detection algorithm in a current frame, where the number of frames by which the historical frame and the current frame are spaced apart is greater than a preset frame value; determining a comparison result between the first image feature and the second image feature; and adjusting a second box selection area corresponding to the bounding box in the current frame by using a first box selection area corresponding to the historical frame as a reference and on the basis of a degree of adjustment that is adapted to the comparison result.

It should be understood by those skilled in the art that the embodiments of this specification may be provided as a method, system or computer program product. Therefore, this specification may take the form of a complete hardware embodiment, a complete software embodiment or an embodiment combining both software and hardware. Moreover, this specification may take the form of a computer program product implemented on one or more computer-usable storage media (including but not limited to disk storage, CD-ROM, optical storage, etc.) containing computer-usable program code.

Specific embodiments of the present specification are described above. Other embodiments are within the scope of the appended claims. In some cases, the actions or steps recorded in the claims may be performed in an order different from that in the embodiments and still achieve the desired results. In addition, the processes depicted in the accompanying drawings do not necessarily require a specific order or continuous order shown to achieve the desired results. In some embodiments, multitasking and parallel processing are also possible or may be advantageous.

The above are merely embodiments of the present specification and are not intended to limit the present specification. Those skilled in the art will appreciate that, various modification and alteration can be made to the present specification. Any modification, equivalent replacement, improvement, etc., that is made within the spirit and principle of the present specification should be included within the scope of the claims of the present specification. In addition, all other embodiments obtained by a person skilled in the art without creative work shall fall within the scope of the present document.

**Claims**

1. A bounding box adjustment method for an object detection algorithm, comprising:

    acquiring a first image feature corresponding to a bounding box of the object detection algorithm in a historical frame and a second image feature corresponding to a bounding box of the object detection algorithm in a current frame when object detection is performed on the basis of the object detection algorithm, wherein a number of frames by which the historical frame and the current frame are spaced apart is not greater than a preset frame value;

determining a comparison result between the first image feature and the second image feature; and

adjusting a second box selection area corresponding to the bounding box in the current frame by using a first box selection area corresponding to the historical frame as a reference and on the basis of a degree of adjustment that is adapted to the comparison result.

2. The method according to claim 1, wherein adjusting the second box selection area corresponding to the bounding box in the current frame by using the first box selection area corresponding to the historical frame as a reference and on the basis of the degree of adjustment that is adapted to the comparison result comprises:

adjusting, upon the condition that the comparison result indicates that a similarity between the first image feature and the second image feature reaches a first threshold, an area parameter corresponding to the second box selection area to an area parameter corresponding to the first box selection area.

3. The method according to claim 1, wherein adjusting the second box selection area corresponding to the bounding box in the current frame by using the first box selection area corresponding to the historical frame as a reference and on the basis of the degree of adjustment that is adapted to the comparison result comprises:

adjusting, upon the condition that the comparison result indicates that a similarity between the first image feature and the second image feature does not reach a second threshold, an area parameter corresponding to the second box selection area to a value approximate to an area parameter corresponding to the first box selection area.

4. The method according to claim 3, wherein adjusting the area parameter corresponding to the second box selection area to the value approximate to the area parameter corresponding to the first box selection area comprises:

performing weighted-averaging on the area parameter corresponding to the first box selection area and the area parameter corresponding to the second box selection area so as to obtain a weighted-averaged area parameter; and

adjusting the area parameter corresponding to the second box selection area to the weighted-averaged area parameter.

5. The method according to claim 4, wherein the similarity between the first image feature and the second image feature is negatively correlated with a weight of the area parameter corresponding to the second box selection area during weighted-averaging.

6. The method according to any one of claims 1 to 5, wherein determining the comparison result between the first image feature and the second image feature comprises:

vectorizing the first image feature and the second image feature so as to obtain a first feature vector corresponding to the first image feature and a second feature vector corresponding to the second image feature; and

calculating a similarity between the first feature vector and the second feature vector so as to obtain the comparison result between the first image feature and the second image feature.

7. The method according to any one of claims 1 to 5, wherein an area parameter comprises a center coordinate of the bounding box in a detection picture, a width of the bounding box and a height of the bounding box.

8. The method according to any one of claims 1 to 5, wherein an image feature comprises at least one of a texture feature, a color feature, a deep learning feature or a grayscale feature.

9. An electronic device, comprising: a processor, and a memory configured to store computer-executable instructions, wherein the computer-executable instructions, when executed, enable the processor to execute the method of any one of claims 1-8.

10. A computer-readable storage medium configured to store computer-executable instructions, wherein the computer-executable instructions, when executed by a processor, implement the method of any one of claims 1-8.

Acquire a first image feature corresponding to a bounding box of the object detection algorithm in a historical frame and a second image feature corresponding to a bounding box of the object detection algorithm in a current frame when object detection is performed on the basis of an object detection algorithm, where the number of frames by which the historical frame and the current frame are spaced apart is not greater than a preset frame value    S102

Determine a comparison result between the first image feature and the second image feature    S104

Adjust a second box selection area corresponding to the bounding box in the current frame by using a first box selection area corresponding to the historical frame as a reference and on the basis of a degree of adjustment that is adapted to the comparison result    S106

FIG. 1

FIG. 2

S1, set initial parameters of an object detection algorithm

S2, use the object detection algorithm to try to perform object detection on an input frame image; if the number of objects is greater than 0, output the initial area parameter of the bounding box

S3, determine a flag of a first frame of the initial area parameter of the bounding box

If the flag of the first frame is 0?

No

Yes

S4, update an area parameter of a result bounding box to an area parameter of the bounding box in a previous frame, and enter the next frame

S5, extract image features from the current frame and the previous frame based on area parameters of the bounding box corresponding to the current frame and the previous frame

S6, calculate similarity between image features in the current frame and the previous frame so as to determine a comparison result

If the similarity sim reaches a feature matching threshold?

No

Yes

S7, use the bounding box in the previous frame as the result bounding box in the current frame

S8, perform weighted-averaging on the initial area parameters of the bounding box in the previous frame and the bounding box in the current frame, so as to obtain the result bounding box in the current frame

FIG. 3

400

410

Feature acquisition module

420

Feature comparison module

430

Bounding box adjustment module

FIG. 4

FIG. 5

## INTERNATIONAL SEARCH REPORT

| International application No. |
|---|
| **PCT/CN2024/120642** |

### A. CLASSIFICATION OF SUBJECT MATTER

G06V 10/22(2022.01)i

According to International Patent Classification (IPC) or to both national classification and IPC

### B. FIELDS SEARCHED

Minimum documentation searched (classification system followed by classification symbols)

IPC: G06V

Documentation searched other than minimum documentation to the extent that such documents are included in the fields searched

Electronic data base consulted during the international search (name of data base and, where practicable, search terms used)

CJFD, CNTXT, DWPI, ENTXT, ENTXTC, VEN, WPABS, WPABSC, 百度, BAIDU, CNKI: 边界框, 检测框, 调整, 更新, 确定, 连续, 平滑, 稳定, 去抖, 跳变, 相似度, 相似性, 阈值, 灰度, 特征, 纹理, 颜色, 帧, bounding box, bbox, adjust, similarity, threshold, frame, grayscale, texture, colour, feature

### C. DOCUMENTS CONSIDERED TO BE RELEVANT

| Category* | Citation of document, with indication, where appropriate, of the relevant passages | Relevant to claim No. |
|---|---|---|
| Y | WO 2023087891 A1 (ZTE CORP.) 25 May 2023 (2023-05-25) description, pages 1-7, and figures 1-8 | 1-2, 6-10 |
| Y | CN 109671103 A (YSTEN TECHNOLOGY CO., LTD.) 23 April 2019 (2019-04-23) description, paragraphs 2-127, and figures 1-8 | 1-2, 6-10 |
| A | CN 116385933 A (SHENZHEN ARATEK BIOMETRICS CO., LTD.) 04 July 2023 (2023-07-04) entire document | 1-10 |
| A | CN 113221750 A (HANGZHOU FABU TECHNOLOGY CO., LTD.) 06 August 2021 (2021-08-06) entire document | 1-10 |
| A | CN 112949785 A (CHANGSHA INTELLIGENT DRIVING INSTITUTE LTD.) 11 June 2021 (2021-06-11) entire document | 1-10 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 November 2024** | **06 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 693 213 A1

**INTERNATIONAL SEARCH REPORT**

**C. DOCUMENTS CONSIDERED TO BE RELEVANT**

| Category* | Citation of document, with indication, where appropriate, of the relevant passages | Relevant to claim No. |
|---|---|---|
| A | CN 110853076 A (CHONGQING YIFEI ZHILIAN TECHNOLOGY CO., LTD.) 28 February 2020 (2020-02-28) <br> entire document | 1-10 |
| A | WO 2023142419 A1 (SHANGHAI SENSETIME INTELLIGENT TECHNOLOGY CO., LTD.) 03 August 2023 (2023-08-03) <br> entire document | 1-10 |

Form PCT/ISA/210 (second sheet) (July 2022)

## INTERNATIONAL SEARCH REPORT
### Information on patent family members

International application No.

**PCT/CN2024/120642**

| Patent document cited in search report | | | Publication date (day/month/year) | Patent family member(s) | | | Publication date (day/month/year) |
|---|---|---|---|---|---|---|---|
| WO | 2023087891 | A1 | 25 May 2023 | CN | 116189251 | A | 30 May 2023 |
| CN | 109671103 | A | 23 April 2019 | None | | | |
| CN | 116385933 | A | 04 July 2023 | None | | | |
| CN | 113221750 | A | 06 August 2021 | None | | | |
| CN | 112949785 | A | 11 June 2021 | CN | 112949785 | B | 20 August 2021 |
| | | | | WO | 2022237902 | A1 | 17 November 2022 |
| CN | 110853076 | A | 28 February 2020 | CN | 110853076 | B | 31 March 2023 |
| WO | 2023142419 | A1 | 03 August 2023 | CN | 114445753 | A | 06 May 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311282716